# EUROPEAN PATENT APPLICATION

(11) **EP 2 413 137 A1**
(43) Date of publication of application: **01.02.2012**
(21) Application number: 11175179.8
(22) Date of filing: 25.07.2011
(51) Int. Cl.: G01N 31/12

(54) **Apparatus and method for combustion analysis of a sample**

(30) Priority: 30.07.2010 GB 1012841
(71) Applicant: Thermo Electron Manufacturing Ltd., Cambridge Cambridgeshire CB5 8BZ (GB)
(72) Inventor: Tordoff, Benjamin, Cambridge, Cambridgeshire CB5 8BZ (GB)
(74) Representative: Parlett, Peter Michael

(57) **Abstract**

Apparatus and method for combustion analysis a sample by determining incomplete combustion in a combustion analyser comprising a combustion chamber (60). A sample is supplied to the combustion chamber and combusted to produce combustion products. A target gas characteristic of incomplete combustion of the sample is detected in the combustion products by a target gas sensor (72). The target gas may be carbon monoxide, methane, methanal and/or methanol, among others. Whether incomplete combustion of the sample has occurred may be determined. A signal indicative of incomplete combustion is outputted from the target gas sensor and the combustion products can be directed to waste using a valve (66) disposed upstream of the target gas sensor (72). Faulty analysis measurements and/or contamination of downstream components, including the target gas sensor, which would otherwise result from incomplete combustion - in particular, from soot formation - can thereby be avoided.

## Description

### Field of the invention

The invention relates to an apparatus and method for combustion analysing a sample, particularly such apparatus and method for detecting incomplete combustion in a combustion analyser.

### Background of the invention

Combustion analysers are used to determine the concentration of one or more components of a sample by combusting the sample, producing gaseous combustion products and analysing the gaseous combustion products for specific oxides. Typically, the carbon, sulphur and/or nitrogen content of the sample may be measured by detecting CO₂, SO₂ and/or NO, respectively. The content of other elements, such as halogen content, e.g. total chloride content, of a sample may also be measured by combustion analysis.

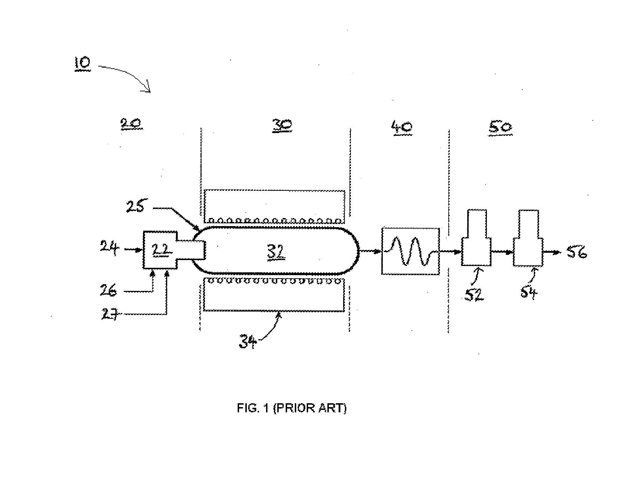

A schematic illustration of a typical combustion analyser is shown in figure 1. The combustion analyser 10 comprises a sample introduction stage 20, a combustion stage 30, a conditioning stage 40, and a detection stage 50. The sample introduction stage 20 comprises a sample introduction apparatus 22, to which are connected a supply of a sample 24, a supply of oxygen 26 and a supply of an inert gas, e.g. argon, 27. The sample introduction apparatus 22 introduces these fluids into a combustion chamber 32 in a suitable form for combustion to take place. A further supply of oxygen 25 may be provided, directly into the combustion chamber 32. The combustion chamber 32 is heated by an electric heater 34, so that the sample is delivered into an oxygen-rich atmosphere at high temperature, typically around 1000°C. The sample is thereby converted into various gaseous combustion products, such as CO₂, H₂O, SO₂, NOₓ, etc. The combustion products leave the combustion chamber 32 and pass through the conditioning stage 40, where processes such as cooling, filtering, drying, etc. of the combustion products take place. The conditioned combustion products then pass through one or more dedicated detectors, e.g. detectors 52, 54, in which properties of the components of the combustion products may be detected. For example, CO₂ may be detected by absorption of infrared radiation, using a non-dispersive infrared (NDIR) detector; SO₂ may be detected by fluorescence with ultraviolet light, using a light sensor; and NO can be detected from de-excitation processes following its reaction with ozone (O₃) to form excited NO₂, using a chemiluminescence light sensor. The detected signals are indicative of the respective amount of each component of the combustion products and can therefore be related to the composition of the original sample. Finally, the detected combustion products are passed out of the detection stage 50, as waste products 56.

The performance of such a combustion analyser depends strongly on its ability to convert the element(s) of interest in a sample into its/their respective oxide(s). A combustion analyser is able to produce reliable results only if the samples are completely combusted (i.e., the samples are converted entirely into constituent oxides). In practice, however, this standard is not always met. The conditions under which a sample is combusted may be subject to variation due to a number of variables, such as type of sample, sample introduction method, sample input flow rate, oxygen input flow rate, combustion chamber temperature, and sample and oxygen mixing efficiency. Under certain conditions, incomplete combustion of a sample and even soot production can occur. These can result in faulty sample analysis measurements being taken. In addition, these can lead to contamination of parts of the combustion analyser, such as the gas conditioning stage and/or the detector(s), necessitating laborious, time-consuming and costly cleaning of the instrument or even replacement of parts.

Conventionally, incomplete combustion of a sample is detected by visually inspecting the combustion chamber and noticing the formation of soot on the chamber walls and/or by noticing the production of erratic analysis results at the detector(s). Clearly, such detection requires the continued presence of an operator. As an alternative, it is understood that an analyser which incorporates an electro-optical device to monitor optically the formation of soot in the combustion chamber has been proposed. However, by the time an operator or such a device has actually detected soot in the combustion chamber, soot production will have already been taking place for some time and components or parts of the combustion analyser downstream of the combustion chamber are therefore likely to have already become contaminated and in need of cleaning or replacement.

Accordingly, it would be desirable to provide an improved or alternative apparatus and method for combustion analysis of samples. In EP 1962088 A1 is disclosed a combustion analyser having a target gas sensor for sensing in the combustion products a target gas characteristic of incomplete combustion of the sample and a controller for receiving a signal indicative of incomplete combustion from the target gas sensor and adjusting an operating condition of the analyser in response to the signal such as switching a valve positioned downstream of the sensor to direct the combustion products away from a processing line containing the conditioning stage and/or detector(s) to a waste line for waste disposal of the combustion products. Alternatively, the controller may be arranged to stop the sample supply and/or adjust the oxygen supply in response to receiving the signal from the target gas sensor. In these ways, parts of the combustion analyser downstream of the combustion chamber may be protected from contamination by soot or other products of incomplete combustion.

The present invention provides an improvement to a combustion analyser of a type having a target gas sensor for sensing in the combustion products a target gas characteristic of incomplete combustion of the sample.

### Summary of the invention

According to the present invention there is provided a combustion analyser for combustion analysing a sample, the analyser comprising:
a combustion chamber for receiving a sample for combustion therein to form combustion products;
a target gas sensor for sensing in the combustion products a target gas characteristic of incomplete combustion of the sample and generating a signal indicative of incomplete combustion; and
a valve disposed upstream of the target gas sensor and switchable between a first valve position for directing combustion products to the target gas sensor and second valve position for directing combustion products to a waste line, wherein the valve is arranged to switch from its first position to its second position in response to the signal indicative of incomplete combustion.

When the valve is in its second valve position for directing combustion products to a waste line, e.g. for waste disposal thereof, the combustion products are thereby not directed to the target gas sensor which is thereby protected from soot because the gas sensor is disposed downstream of the valve. This is in contrast to arrangements in the prior art in which the target gas sensor is positioned such that the combustion gases must pass over the target gas sensor in order to be diverted to waste and thus the gas sensor continues to be exposed to soot even after detecting incomplete combustion and switching a valve to direct combustion products to a waste line. In the prior art case, the soot will typically cause damage to the target gas sensor making it non-reusable or non-reliable to reuse and therefore requiring replacement. In accordance with the present invention, the valve must be disposed upstream of the target gas sensor, i.e. located before the target gas sensor in the stream of combustion products leaving the combustion chamber. The arrangement of the present invention uniquely provides that the valve is activated by the signal from the target gas sensor and then provides protection for the target gas sensor from soot. The target gas sensor may therefore be useable many times without failure and thus has an extended lifetime.

The valve is disposed upstream of the target gas sensor between the sensor and the combustion chamber. The target gas sensor may be disposed on a separate line to a processing line, i.e. a processing line for receiving combustion products from the combustion chamber for downstream processing thereof, but preferably the target gas sensor is disposed on such a processing line. Accordingly, preferably the valve is switchable between the processing line and the waste line. Preferably, in its first position, the valve directs combustion products to the processing line. Preferably, the processing line comprises combustion products processing means for receiving and processing the combustion products downstream of the combustion chamber. Where the target gas sensor is disposed on a processing line, the target gas sensor is preferably disposed upstream of the combustion products processing means. In the arrangement of the present invention, in addition to protection of the combustion products processing means, the target gas sensor is also protected from contamination by the products of incomplete combustion, e.g. such as soot, which is not achievable with the prior art arrangements. The valve may therefore perform a dual function of protecting both the combustion products processing means and the target gas sensor. In other words, the invention enables in some embodiments a single valve to protect both the combustion products processing means and the target gas sensor.

The valve is preferably controlled by a controller. Preferably, the analyser further comprises such a controller for receiving a signal indicative of incomplete combustion from the target gas sensor and switching the valve from its first position to its second position in response to receiving the signal indicative of incomplete combustion, e.g. switching the valve from the processing line to the waste line. The controller may comprise a microprocessor or the like, which interprets the signal and then activates the valve.

The valve may be subsequently switched back from the second to the first valve position, such as when it is safe to do so, e.g. once complete combustion conditions have been established again.

In some embodiments, there may be one or more further valves which are arranged to switch in response to the signal indicative of incomplete combustion. For example, where the target gas sensor is disposed on a separate line to the processing line, the valve may be switchable between the separate line and the waste line to protect the target gas sensor and there may be a further valve switchable between the processing line and the or another waste line to protect the combustion products processing means disposed on the processing line. The one or more further valves may also be controlled by the same controller, e.g. a common controller for all valves.

As stated above, a known indicator for incomplete combustion is the appearance of soot in the combustion chamber. Thus, with previous techniques, incomplete combustion is detected once soot formation has actually begun, by which time some degree of combustion analyser contamination has already taken place. This is a problem which has been present in all commercial combustion analysers to date, even in those improving on the visual detection technique by employing electro-optical detection.

The invention is based on an indicator of incomplete combustion, which, importantly, is observable before the formation of soot. It is believed that, when the combustion conditions deteriorate so that incomplete combustion of a sample starts to occur, soot is not formed immediately, but there is an intermediate stage during which a number of other, preliminary components are produced and may be detected to indicate the onset of incomplete combustion. The preliminary component(s) may include one or more of carbon monoxide (CO), methane (CH₄), methanal/formaldehyde (CH₂O), and methanol (CH₃OH), among others (it has been noted that there are many components which may be formed from the sample during an incomplete combustion, from various thermally cracked and/or partially oxidised products, down to the smaller components mentioned above).

The presence in the combustion products of such a gas, or gases, has thus been found to be indicative or characteristic of the early stages of incomplete combustion of a sample, since such gas tends to be produced before the combustion conditions become sufficiently poor that soot starts to be formed. By providing a detector which is capable of sensing the presence of such a gas in the combustion products, a combustion analyser, in which it is possible to detect incomplete combustion before soot is formed, has been achieved. Accordingly, whilst the target gas sensor may be referred to and regarded informally as a soot sensor, it actually detects a gas, or gases, indicative or characteristic of the early stages of incomplete combustion which precedes soot formation, rather than detects actual soot.

A gas, or selection of gases, indicative of incomplete combustion is selected as a target gas to be detected by a target gas sensor. The target gas sensor may be exposed to combustion products, either during combustion or following combustion of a sample, preferably following combustion of a sample. When the target gas is sensed by the target gas sensor, a signal is generated by the target gas sensor, indicating that incomplete combustion of the sample is taking/has taken place. As a result of that signal being generated, the operating conditions of the combustion analyser can be modified, as desired. For example, combustion of that sample could be stopped; or combustion of that sample could be slowed down, to increase the combustion efficiency. According to the present invention, a valve can be activated to enable the combustion products from that sample to be vented to waste instead of passing on to a combustion products processing stage such as a conditioning stage, detection stage, or the like. Since such target gases are typically produced before incomplete sample combustion leads to the production of soot, the combustion analyser, including both combustion products processing means, as well as the target gas sensor itself, can be substantially protected against serious contamination, by taking evasive action before soot has actually been produced. Upon detecting incomplete combustion of the sample, as well as activating the valve(s) to direct the combustions immediately away from the downstream components, additionally the combustion of that sample could be stopped or combustion of that sample could be slowed down to prevent or reduce contamination due to soot etc. of upstream components including the combustion chamber. Slowing down the combustion process, e.g. by reducing the injection speed of the fuel, should improve the stoichiometry of the reaction thereby increasing the oxygen/fuel ratio. This should in turn reduce the formation of soot since soot formation is due to a lack of free 02 in the vicinity of fuel. Therefore not only can it prevent or reduce contamination, it can actively change the conditions from soot forming to non-soot forming.

The invention provides the advantages of relatively straightforward and early detection of incomplete combustion of a sample. This allows for the identification of potentially erroneous analysis results and the prevention of contamination of the analyser due to soot production.

Downstream of the combustion chamber, there is typically a combustion products processing means for receiving and processing the combustion products. This may include, as desired, one or more gas conditioning units and one or more detectors. Preferably, the target gas sensor is disposed upstream of the combustion products processing means. Preferably still, the target gas sensor is disposed downstream of the combustion chamber, such that only the valve is disposed between the target gas sensor and the combustion chamber. In this way, incomplete combustion of a sample can be detected before the combustion products pass on to the more contamination-sensitive combustion products processing means. It is thereby possible to take mitigating action before soot production, or at least before consequent contamination of the processing means, has taken place.

Alternatively, target gas detection may take place during the sample-combusting step. The combustion chamber can be divided into a combustion region and a target gas detection region. The sample is combusted in the combustion region, then the at least partially combusted sample is passed out to the detection region - such as a side loop from the combustion chamber - for target gas detection. If the target gas is detected, then corrective action can be taken. After passing over the target gas sensor, the at least partially combusted sample can be passed back into the combustion region, to undergo further combustion, so that uncombusted sample not only has a further opportunity to be combusted, but the combustion conditions may be improved relative to the first time through the combustion region.

Preferably, the target gas sensor is a combustible gas sensor. The combustible gas sensor may be of electronic or catalytic type. Such sensors are capable of detecting very low concentrations (at ppm levels) of combustible gases. Preferably, the target gas is a combustible gas, such as one or more of carbon monoxide, methane, methanal and methanol for example.

Advantageously, the signal generated by the target gas sensor and read by the controller can adjust the valve of the combustion analyser in response thereto. For example, the controller may operate the valve upstream of the sensor to redirect the incompletely combusted sample away from a combustion products processing line for downstream processing (e.g., conditioning and/or sample constituent detection), and into a waste line for waste disposal. Thus, contamination of the components of the combustion products processing means as well as the target gas sensor can be avoided or reduced.

Additionally, in response to the signal from the target gas sensor, the rate of supply of sample and/or oxygen to the combustion chamber may be adjusted (which includes cases of stopping the supply of sample and/or oxygen), to improve the combustion efficiency (or stop combustion). For example, the sample supply rate may be reduced, or the oxygen supply rate may be increased, to increase the ratio of oxygen to sample in the combustion chamber. Alternatively or additionally, both supply rates may be reduced, so that an overall lower rate of fluid flow through the analyser is achieved.

One extreme example of this is to stop the supply of sample completely, to prevent contamination in situations where relative flow rate adjustments may not take effect quickly enough. In any event, immediate operation of the valve to direct the products to waste will protect the downstream components.

For the above mentioned purposes, the analyser may further comprise an introduction apparatus for supplying a sample at a sample supply rate, and for supplying oxygen at an oxygen supply rate, into the combustion chamber, wherein the introduction apparatus is arranged to be controlled by the controller to adjust the sample supply rate and/or to adjust the oxygen supply rate following receipt by the controller of the signal indicative of incomplete combustion.

When an incomplete combustion condition is detected for a particular sample, it may be desirable or necessary to perform a cleaning operation. In severe cases, this may mean dismantling components for cleaning. However, where the sensor has detected a target gas in time to prevent such contamination, it may be that only the combustion chamber has some degree of sooting. Accordingly, before starting to analyse a new sample, the controller may effect a 'self-clean' operation, whereby only oxygen is pumped into the combustion chamber for a set period of time. Any soot in the combustion chamber can thereby be relatively easily burned off.

A combustion analyser may be assembled with the above target gas sensor from manufacture, or a target gas sensor module may be retrofitted to an existing analyser. Alternatively, the target gas sensor module may be formed as an outlet tube portion on a combustion chamber, to form an integral unit. The module preferably comprises the valve disposed upstream of the target gas sensor. In other embodiments, the valve may be part of the analyser upstream of the target gas sensor but not part of the target gas sensor module.

According to a further aspect of the invention, there is provided a method of combustion analysing a sample in a combustion analyser comprising a combustion chamber, the method comprising the steps of: supplying the sample to the combustion chamber; combusting the sample to produce combustion products; detecting in the combustion products a target gas characteristic of incomplete combustion of the sample using a target gas sensor; determining whether incomplete combustion of the sample has occurred by generating a signal from the target gas sensor indicative of incomplete combustion; and operating a valve disposed upstream of the target gas sensor in response to the signal indicative of incomplete combustion to switch the valve from a first valve position for directing combustion products to the target gas sensor to a second valve position for directing combustion products to a waste line.

The term combustion products is used here to mean any substances present in the combustion analyser during or following the combusting step and this may include the sample and other substances, such as oxygen or a carrier gas, and their respective constituents, both in pre-combustion and post-combustion forms, whether fully or incompletely combusted.

Other preferred features and advantages of the invention are set out in the description and in the dependent claims which are appended hereto.

### Detailed description of the invention

The invention may be put into practice in a number of ways and some embodiments will now be described, by way of non-limiting example only, with reference to the following figures, in which:
Figure 1 shows a schematic layout of a typical, prior art combustion analyser;
Figure 2A shows a schematic layout of a target gas sensor and valve arrangement according to an embodiment of the invention with the valve in a first position;
Figure 2B shows the layout of Figure 2A with the valve in a second position; and
Figure 3 shows a more detailed schematic layout of a target gas sensor and valve arrangement according to one embodiment of the invention.

Figure 1 has been described above.

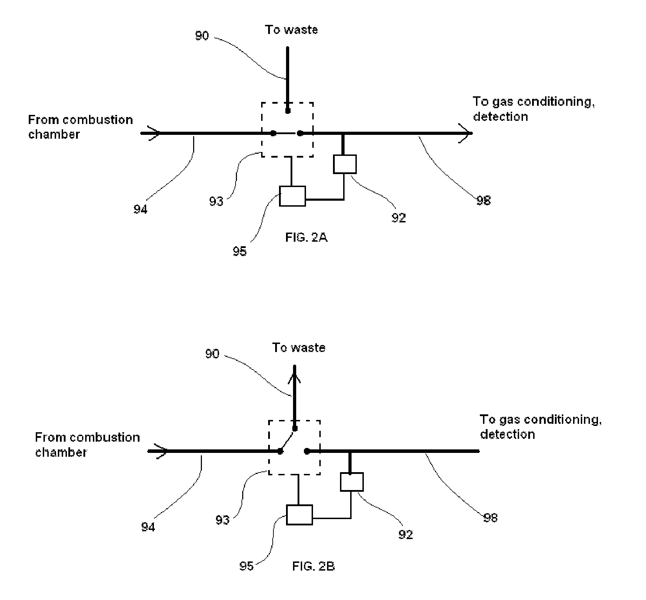

Referring to Figures 2A and 2B, there is shown a schematic layout of a target gas sensor and valve arrangement according to an embodiment of the invention demonstrating the switching of the valve between first and second positions to protect the sensor and downstream products processing means as hereinafter described. Gaseous combustion products from the combustion chamber or furnace (not shown) are first passed along a products line 94 towards a gas processing line 98 on which are positioned combustion products processing means such as one or more gas conditioning units (not shown), e.g. one or more of dryers, filters and the like, and one or more combustion products detectors (not shown). A target gas sensor 92 is positioned on the processing line 98 on the upstream side of the combustion products processing means and is located so as to be exposed to the gaseous combustion products as they pass to the downstream combustion products processing means. Positioned immediately upstream of the sensor 92 between the sensor and the combustion chamber is a valve 93, the valve including an actuator (not shown) to switch the valve. When the analyser is in its normal operating mode, the valve is set to a first position as shown in Figure 2A, so that gases flow through the valve from the products line 94 to the processing line 98. In the event that the target gas sensor 92 senses a gas indicative of incomplete combustion, which has been found to precede soot formation, the sensor generates a signal in response to which the valve is switched to a second position as shown in Figure 2B, so that gases are diverted through the valve from the products line 94 to a waste line 90, which is subsequently vented. The signal from the sensor 92 may be directly used to activate the valve 93 or may be sent, as in the embodiment shown, to a controller in the form of signal processing electronics 95 which in turn activates the valve. The signal processing electronics 95 may be, for example, a microprocessor such as an ARM. By positioning the valve 93 upstream of the target gas sensor 92, the activation of the valve to divert incompletely combusted gases to the waste line protects the sensor from continued exposure to the gases which could otherwise damage the sensor. In this way, advantageously, both the downstream combustion products processing means and the sensor are protected by the action of the valve.

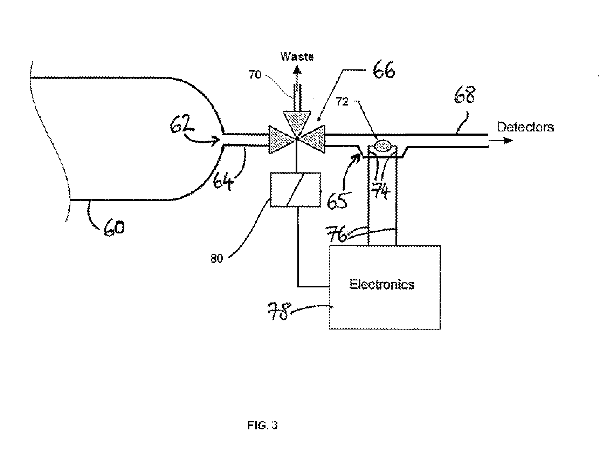

Referring to figure 3, there is schematically shown a target gas sensor arrangement installed in a combustion analyser, in accordance with one embodiment of the invention. A combustion chamber or furnace 60 has one or more inlet ports (not shown) for receiving a supply of a sample and a supply of oxygen and argon. A supply of oxygen only, instead of oxygen and argon, may be provided, if desired. For example, the sample supply arrangement shown in Figure 1 may be employed to supply the sample and oxygen and optionally argon to the combustion chamber 60. The combustion chamber 60 is heated by a heater (not shown) disposed about the chamber (e.g. of the type as shown in Figure 1), so that temperatures inside the chamber are suitable for combustion of the sample to take place. Combustion products formed in the combustion chamber 60 pass out of the chamber through an outlet port 62, into a combustion products line 64. The combustion products line 64 leads to an electrically actuated three-way valve 66, which may be operated to switch the connection of the combustion products line between a downstream processing line 68 and a downstream waste line 70.

Along the processing line 68 is disposed one or more combustion products processing devices (not shown), such as a gas conditioner (e.g. Permapure (Trade name)), a detector (e.g. a detector for one or more of the gaseous oxide combustion products), or a combination of one or more of these. The processing device(s) employed in the combustion analyser depends on the sample and the type of analysis to be performed, as will be well understood.

The waste line 70 carries undesired combustion products away from the combustion products line 64 for waste disposal of the combustion products. Such waste disposal may involve simply venting the gases to the surroundings, or may involve passing the gases through one or more waste conditioning units (not shown) to remove, or convert to harmless products, any hazardous gases in the combustion products and/or remove particles as well as gases.

Installed in the processing line 68 substantially immediately downstream following the valve 66 is a target gas sensor 72. The target gas sensor 72 is positioned upstream of the one or more combustion products processing devices disposed on the processing line 68. The target gas sensor 72 is positioned so that the combustion products travelling along the processing line 68pass over the sensor, which is therefore able to detect the presence of a target gas in the combustion products. In this embodiment, the target gas sensor 72 is received within a recess 65 in the processing line 68for seating the sensor. Connector pins, or wires, 74 pass from the sensor 72, through the wall of the processing line 68, and connect to wires 76 which themselves are connected to an electronic controller 78.

The controller 78 is also connected to an actuator 80, which operates the valve 66 to switch a fluid path from the combustion products line 64 into either the processing line 68 or the waste line 70. The controller 78 is arranged to control the actuator 80 in response to a signal indicative of incomplete combustion generated by the target gas sensor 72 and received by the controller.

During combustion analysis of a sample, a supply of the sample and a supply of oxygen are provided to the heated combustion chamber 60, so that the sample is combusted therein. The combustion chamber 60 is heated by an external heater surrounding it (not shown), for example an electric heater 34 as shown in Figure 1. Depending on the combustion conditions, the sample may be either completely or incompletely combusted. Under sufficiently poor combustion conditions, where there is a serious oxygen deficiency, soot may be produced in the combustion chamber 60. Absent any intervention, the combustion products, including soot, would pass out of the combustion chamber 60, through the combustion products line 64 and into the processing line 68. As a result, any gas conditioners and detectors, through which the combustion products would pass, would become contaminated by the soot and in need of cleaning.

However, in the early stages of incomplete combustion, before soot is actually produced, a number of gases indicative of the incomplete combustion are typically produced in the combustion products. The gas(es) produced may include, among others, carbon monoxide, methane, methanal/formaldehyde, and methanol. A specific gas, or selection of gases, characteristic of incomplete combustion is therefore chosen as the target gas to be detected by the target gas sensor 72. As the combustion products enter the processing line 68, the sensor 72 is exposed to the various combustion product gases and senses the presence of the target gas. A signal is generated by the target gas sensor 72 as a result of sensing the target gas which is received by the controller 78, which then takes evasive or corrective action. As a result, an operating condition of the combustion analyser can be modified, as desired.

In the embodiment of figure 3, the controller 78 instructs the actuator 80 to operate to switch the valve 66 so that the combustion products line 64 is no longer in fluid communication with the processing line 68, but becomes connected to the waste line 70. In this way, the redirected combustion products are prevented from contaminating sensitive gas conditioners or detectors and are instead disposed of as waste. In this unique arrangement, the target gas sensor 72 is also protected by switching the valve 66. Since the target gas is generally produced before the incomplete combustion leads to soot formation, the combustion analyser and its various sensitive sensors and detectors, can be effectively protected against serious contamination, by taking evasive action as soon as the target gas is detected.

Other action by the controller may additionally be taken. The additional evasive or corrective action which may be taken by the controller following receipt of a signal indicative of incomplete combustion of a sample may include, among other possibilities, one or a combination of:
a) stopping the supply/injection of the sample into the combustion chamber 60, or withdrawing a sample crucible holding a solid sample using a solids introduction module;
b) reducing the supply rate of the sample into the combustion chamber;
   and
c) increasing the supply rate of oxygen into the combustion chamber.

In any case, in order to reduce or avoid the need for manual cleaning of the analyser, the potential soot production should preferably be confined to the combustion chamber 60, or at least upstream of the 'cold' parts of the analyser along the processing line 68.

It may be that, once injection of a sample which has not been completely combusted is finished, although downstream, 'cold' parts of the analyser have been protected by taking evasive or corrective action, some degree of sooting has taken place in the combustion chamber. This may relatively straightforwardly be burned off by supplying to the heated combustion chamber 60 sufficient oxygen to remove it. In one embodiment of the invention, the controller 78 is arranged to perform this self-cleaning operation automatically for a predetermined period when incomplete combustion of a first sample occurs, before a second sample is supplied to the combustion analyser for analysis.

Without the target gas sensor 72, the risk of soot contamination of sensitive analyser parts resulting from incomplete combustion is high. This is especially problematic when the combustion analyser is set up automatically to run a large series of samples without operator supervision, such as overnight or over a weekend, as the whole series of results could have to be discarded. On the other hand, with the target gas sensor 72, incomplete combustion and/or soot production can be detected relatively early, so that evasive or corrective action may be quickly taken and only the results (if any are actually recorded before the intervention) for the incompletely combusted sample need be discarded. That sample may, if appropriate, be combustion analysed again under modified combustion conditions, as set out above.

Once a signal indicative of incomplete combustion is received by the controller 78 from the target gas sensor 72, due to the risk of contamination of downstream analyser parts, it is preferable simply to redirect the combustion products to waste rather than continue to process them for sample component detection. However, if the operating conditions can be modified sufficiently fast to achieve substantially complete combustion (or, at any rate, much improved combustion efficiency) before soot production has begun to occur, then it may be appropriate in some circumstances to continue to pass the combustion products into the processing line 68 for analysis.

In a preferred embodiment of the invention, the target gas sensor is provided by a combustible gas sensor, either of the electronic or catalytic type. Such sensors are capable of detecting very low concentrations - down to ppm levels - of combustible gases and operate by producing an electrical signal representative of the amount of combustible gas at their sensing elements. These sensors are generally capable of operating with a substantially linear relationship between target gas concentration and sensor output and with relatively low power consumption. These types of sensor are presently used as safety devices, for example as gas leak detectors, and in control systems, for example in automotive engines. Combustible gas sensors are widely available and relatively inexpensive.

A catalytic combustible gas sensor comprises an electrically resistive wire, typically platinum, embedded in a small bead of a suitable metal oxide, such as silica, which has been treated with a combustion promoting catalyst, such as platinum, palladium or thorium. A current passed through the wire heats the bead to a desired temperature, typically between 400°C and 600°C. Changes in the resistance of the wire are monitored to provide a measure of change in the bead temperature. When the sensor is installed in the combustion products line 64 of a combustion analyser and subjected to a flow of combustion products not including a combustible gas which the sensor is configured to detect, the bead will reach a particular, substantially steady-state, temperature. The resistance of the wire then remains substantially constant. When the target gas for the sensor is present in the combustion products, the target gas is oxidised at the relatively low temperature as indicated above, at the surface of and due to the catalyst (i.e. the bead). This results in a rise in temperature of the bead and corresponding rise in resistance of the electrical wire, which is detected by the controller 78 as a change in the sensor signal, the level of which is indicative of the amount of target gas being detected.

An electronic combustible gas sensor comprises a relatively thin, micro-crystal layer of a suitable metal oxide, such as tin oxide (SnO₂) or tungsten oxide (WO₃), on an electrically heated substrate, such as a ceramic. The substrate is typically heated to around 400°C. Oxygen, which is adsorbed between crystal boundaries of the micro-crystal layer, forms a potential barrier, restricting the electrical current flowing through the crystal layer, depending on the amount of adsorbed oxygen. Changes in the current are monitored to provide a measure of change in the amount of oxygen which is adsorbed by the micro-crystal layer. When the sensor is installed in the processing line 68 of a combustion analyser and subjected to a flow of combustion products not including a combustible gas which the sensor is configured to detect, the current flowing through the micro-crystal layer will reach a particular, substantially steady-state, value. When the target gas for the sensor is present in the combustion products, the target gas acts as a deoxidising gas, in that it is oxidised at the sensor and removes some of the adsorbed oxygen from the micro-crystal layer. As a result, the electrical resistance of the micro-crystal layer decreases and a higher current can flow through the layer. This is detected by the controller 78 as a change in the sensor signal, the level of which is indicative of the amount of target gas being detected.

Effectively, then, the micro-crystal layer acts as a deoxidising gas-sensitive variable resistor. The conductivity of the sensor increases in the presence of a target gas, depending on the concentration of the target gas. The change in conductivity is converted to an output signal which corresponds to the target gas concentration.

Both catalytic and electronic combustible gas sensors can be used as the target gas sensor 72 in a combustion analyser. An electronic combustible gas sensor is capable of detecting incomplete combustion of a sample prior to the actual production of soot, with relatively quick response times. A catalytic combustible gas sensor is also capable of detecting incomplete combustion of a sample prior to the actual production of soot. However, the response times for some catalytic sensors may not be considered fast enough to be effective in the early detection of incomplete combustion. For this reason, the electronic-type sensors are generally preferred.

Commercially available sensors are typically delivered in a housing which may be straightforwardly installed in a gas line. For example, a model number TGS2610 combustible gas sensor, manufactured by Figaro Engineering Inc. of Osaka, Japan, is supplied in a standard "TO-5" package and may be mounted in a gas line by O-ring sealing. Also, the connecting wire passages are integrated into this housing and no special measures are generally required to protect and/or seal them. In EP 1962088 A1 it is shown that such sensors are suitable for this application.

The Figaro TGS2610 sensor is the preferred target gas sensor. This sensor is understood to have a quick gas response, low power consumption, long life and to be relatively small. The sensor is particularly suitable for detecting methane, ethane and/or propane as the target gas. Of course, other electronic combustible gas sensors, catalytic combustible gas sensors, or indeed other, suitable target gas sensors may be employed, sourced from either Figaro Engineering Inc. or another manufacturer. For example, other sensors which are available are able specifically to target carbon monoxide. Still others are able to target more than one target gas, either simultaneously or by operating the sensing element at different temperatures, for greater specificity towards one or other of the target gases.

A target gas sensor arrangement in accordance with the invention may be incorporated into a combustion analyser at original assembly, or may be retrofitted to existing analysers with relative ease. The target gas sensor may be pre-installed in a small gas line/tube portion, with its connector pins/wires extending through the line wall, ready for connection to a controller. If desired, the tube portion may be fitted with an actuatable valve at its upstream end, so that a controller may switch the flow path away from the target gas sensor and a processing line of a combustion analyser and into a waste line, as described above. The tube portion with the target gas sensor (and optional redirection valve) form a target gas sensor module, which may simply be inserted into a combustion analyser, preferably immediately after the combustion chamber and before the combustion products processing device(s). Operation of the instrument would then be as previously described.

Alternatively, the combustion chamber may be manufactured with an outlet tube portion, in which the target gas sensor and its upstream valve is installed, so that the combustion chamber and target gas sensor are provided as an integrated unit.

In order best to take evasive or corrective action when incomplete combustion takes place, the target gas sensor should ideally be located as closely as possible to the combustion chamber, on its downstream side with only the valve disposed between the sensor and the combustion chamber..

One alternative arrangement, according to a further embodiment, is as follows. The combustion chamber is configured with a first chamber/region in which a sample and oxygen are received for at least partial combustion of the sample. The first chamber/region feeds into transfer tubing, which leads the at least partially combusted sample outside the combustion chamber to a 'side loop', in which the target gas sensor is installed along with an upstream valve positioned between the sensor and the first chamber/region. From there, the gases are led back into the combustion chamber, to a second chamber/region, in which further combustion of the sample can take place. In this arrangement, combustion conditions can be altered quickly, after detection of the target gas by the sensor in the transfer tubing, so that the combustion conditions in the second chamber/region can be improved for more efficient combustion therein. Alternatively, it may simply be that this arrangement provides more time between detection of a target gas and passage of the incompletely combusted products to the downstream, contamination-sensitive processing device(s), so that the products may be diverted to waste in time before any have been able to pass down the processing gas line. In this arrangement, a valve is typically required on the processing gas line upstream of the processing device(s) which may be activated to direct products to waste and away from the processing gas line in the event of detecting incomplete combustion. Generally, the option of dynamically adjusting the operating conditions in the second chamber/region may be of interest when a relatively low level of incomplete combustion is detected by the target gas sensor; otherwise, redirecting the combustion products to waste may be preferable.

Although the embodiment of figure 3 shows a recess 65 in the combustion processing line 68 for seating the target gas sensor 72, this need not be provided. The line 68 may remain substantially tubular or may take any number of suitable forms. Such possible variations will be readily appreciated by the skilled person.

Although the above embodiments use one target gas sensor, and although some sensors are able to detect more than one target gas, it may be desirable in some applications to use more than one sensor. This may be for simultaneous detection of different target gases, or for monitoring the combustion products at different locations within the combustion analyser, or simply for redundancy.

The target gas sensor arrangement of the invention can be used to assist in method development for a combustion analyser. For example, the arrangement may be used to determine an acceptable efficiency of combustion of a sample, by the following method. A sample and oxygen and argon are supplied to the combustion chamber at respective sample and oxygen and argon flow rates and the sample is combusted to produce combustion products. In some cases, the argon may be omitted but for methods which meet current ASTM requirements, argon is required as a carrier gas. The target gas sensor is used to detect in the combustion products a target gas characteristic of incomplete combustion of the sample and to generate a signal representative thereof for receipt by a controller. If the received signal is not at a predetermined, acceptable value, or within a predetermined, acceptable range of values, the controller adjusts the relative proportion of oxygen to sample supplied to the combustion chamber. This process takes place iteratively until the signal received by the controller is at the predetermined value, or within the predetermined range of values.

Such a method can be helpful in determining a maximum or optimum sample to oxygen ratio for a class of samples to be analysed. The relative flow rates of sample and oxygen into the combustion chamber can be adjusted up or down until the target gas sensor signal passes below/above, or reaches, a predetermined value (which value may be zero or substantially zero).

The invention may be employed for various applications in, for example, the chemical, refinery, hydrocarbon, petrochemical, and food and beverage sectors. The invention may be used in the analysis of solid, high-viscosity, liquid or gaseous samples. In particular, the invention may be used in the analysis of refinery products, such as gasoline and diesels and liquefied pressurised gases (LPGs). An LPG is typically formed into a gaseous vapour prior to introduction into the combustion analyser. In addition to use in the laboratory, e.g. in laboratory combustion analysers, the invention may find use in process instruments such as online combustion analysers. Examples of the latter may include online sulphur analysers, online GC analysers and online mass spectrometry devices, e.g. which may be used to control processes within a refinery such as cracking and middle distillate production efficiency.

## Claims

1. A combustion analyser for combustion analysing a sample, the analyser comprising:
a combustion chamber for receiving a sample for combustion therein to form combustion products;
a target gas sensor for sensing in the combustion products a target gas characteristic of incomplete combustion of the sample and generating a signal indicative of incomplete combustion; and
a valve disposed upstream of the target gas sensor and switchable between a first valve position for directing combustion products to the target gas sensor and a second valve position for directing combustion products to a waste line, wherein the valve is arranged to switch from its first position to its second position in response to the signal indicative of incomplete combustion.

2. The analyser of claim 1, further comprising a combustion products processing means for receiving and processing the combustion products downstream of the combustion chamber, wherein the target gas sensor is disposed upstream of the combustion products processing means.

3. The analyser of claim 1 or 2, wherein the target gas sensor is disposed downstream of the combustion chamber with only the valve disposed between the target gas sensor and the combustion chamber.

4. The analyser of any of the preceding claims, further comprising a controller for controlling the valve, wherein the controller is for receiving the signal from the target gas sensor and switching the valve from its first position to its second position in response to receiving the signal..

5. The analyser of any of the preceding claims, wherein the gas sensor is a combustible gas sensor.

6. The analyser of any of the preceding claims, wherein the target gas is a combustible gas.

7. The analyser of claim 6, wherein the target gas is one or more of carbon monoxide, methane, methanal, and methanol.

8. The analyser of any of claim 4, or claims 5 to 7 when dependent on claim 4, wherein the controller is further for adjusting another operating condition of the combustion analyser in response to the received signal.

9. The analyser of any of the preceding claims, wherein the target gas sensor is disposed on a processing line for receiving combustion products for downstream processing thereof and wherein the valve is switchable between the processing line and the waste line.

10. The analyser of claim 8, or claim 9 when dependent on claim 8, further comprising an introduction apparatus for supplying a sample at a sample supply rate, and for supplying oxygen at an oxygen supply rate, into the combustion chamber, wherein the introduction apparatus is arranged to be controlled by the controller to adjust the sample supply rate and/or to adjust the oxygen supply rate following receipt by the controller of the signal indicative of incomplete combustion.

11. A method of combustion analysing a sample in a combustion analyser comprising a combustion chamber, the method comprising the steps of:
supplying the sample to the combustion chamber;
combusting the sample to produce combustion products;
detecting in the combustion products a target gas characteristic of incomplete combustion of the sample using a target gas sensor;
determining whether incomplete combustion of the sample has occurred by generating a signal from the target gas sensor indicative of incomplete combustion; and
operating a valve disposed upstream of the target gas sensor in response to the signal indicative of incomplete combustion to switch the valve from a first valve position for directing combustion products to the target gas sensor to a second valve position for directing combustion products to a waste line.

12. The method of claim 11, further comprising the step of processing the combustion products, wherein the detecting step takes place before the processing step.

13. The method of claim 11 or 12, wherein the detecting step takes place substantially immediately after the combusting step.

14. The method of any of claims 11 to 13, wherein the detecting step comprises passing the combustion products over the target gas sensor.

15. The method of any of claims 11 to 14, wherein the target gas is one or more of carbon monoxide, methane, methanal, and methanol.
